# EUROPEAN PATENT APPLICATION

(11) **EP 4 831 616 A1**
(43) Date of publication of application: **28.10.2026**
(21) Application number: 24906928.7
(22) Date of filing: 28.10.2024
(51) Int. Cl.: G01N 21/27, G01N 21/3563

(54) **MEASUREMENT SYSTEM, PROCESSING DEVICE, METHOD FOR DETERMINING MEASURED QUALITY VALUE OF FRUIT, AND COMPUTER PROGRAM**

(30) Priority: 21.12.2023 JP 2023215568
(71) Applicant: KUBOTA CORPORATION, Osaka-shi, Osaka 530-0011 (JP)
(72) Inventor: SASAMOTO, Hirokazu, Sakai-shi, Osaka 590-0908 (JP); HAYAKAWA, Jun, Sakai-shi, Osaka 590-0908 (JP); HIRONAKA, Nao, Sakai-shi, Osaka 590-0908 (JP); TANAKA, Satoshi, Sakai-shi, Osaka 590-0908 (JP); NAMBU, Masahito, Sakai-shi, Osaka 590-0908 (JP); NISHIKORI, Hiroki, Sakai-shi, Osaka 590-0908 (JP); MORIMOTO, Susumu, Sakai-shi, Osaka 590-0908 (JP); OGUMA, Takashi, Sakai-shi, Osaka 590-0908 (JP)
(74) Representative: Cabinet Beau de Loménie
(86) International application number: PCT/JP2024/038366
(87) International publication number: WO 2025/134540

(57) **Abstract**

A measurement system (1) according to the present disclosure includes a first measurement device (2) that measures quality of a plurality of fruits (K), a second measurement device (4) that measures quality of a certain number of fruits (K) among the plurality of fruits (K) in an arrangement different from an arrangement used for the first measurement device (2), and a management server (8) that determines a measured quality value of a target fruit (KT) among the plurality of fruits (K). The management server (8) includes a processing unit (32) that performs a process of determining the measured quality value on the basis of scaling data (S) and on the basis of an output of the first measurement device (2) obtained when quality of the target fruit (KT) is measured. The scaling data represents a correlation between an output of the first measurement device (2) and a quality value based on an output of the second measurement device (4).

## Description

### TECHNICAL FIELD

The present disclosure relates to a measurement system, a processing device, a method for determining a measured quality value of fruit, and a computer program.

The present application claims priority based on Japanese Patent Application No. 2023-215568 filed on December 21, 2023, the entire contents of which are incorporated herein by reference.

### BACKGROUND ART

Patent Literature 1 discloses a measurement device that emits light to an object to be measured (hereinafter, measurement object) such as a fruit and spectroscopically analyzes transmitted light to obtain quality values such as a sugar content and acidity of the measurement object.

This measurement device includes a sensor unit including a light source and a light receiving unit that receives transmitted light. Measurement of a quality value by the measurement device is performed by bringing the sensor unit close to the measurement object. The light source of the sensor unit disposed close to the measurement object emits light to the measurement object. The light receiving unit of the sensor unit receives the transmitted light transmitted through the measurement object.

### CITATION LIST

### [PATENT LITERATURE]

PATENT LITERATURE 1: Japanese Laid-Open Patent Publication No. 2020-101409

### SUMMARY OF THE INVENTION

A measurement system according to the present disclosure includes: a first measurement device that measures quality of a plurality of fruits; a second measurement device that measures quality of a certain number of fruits among the plurality of fruits in an arrangement different from an arrangement used for the first measurement device; and a processing device that determines a measured quality value of a target fruit among the plurality of fruits. The processing device includes a processing unit that performs a process of determining the measured quality value on the basis of scaling data and on the basis of an output of the first measurement device obtained when quality of the target fruit is measured. The scaling data represents a correlation between an output of the first measurement device and a quality value based on an output of the second measurement device.

### BRIEF DESCRIPTION OF DRAWINGS

[FIG. 1] FIG. 1 is a diagram illustrating an example of an overall configuration of a measurement system according to an embodiment.
[FIG. 2] FIG. 2 is a block diagram illustrating a main part of an agricultural machine.
[FIG. 3] FIG. 3 is a block diagram illustrating an example of a first measurement device.
[FIG. 4A] FIG. 4A is a block diagram illustrating an example of a second measurement device.
[FIG. 4B] FIG. 4B is a cross-sectional view of a second measurement head.
[FIG. 5] FIG. 5 is a block diagram illustrating an exemplary configuration of a management server.
[FIG. 6] FIG. 6 is a flowchart illustrating an example of quality measurement work performed on a fruit K in a farm field.
[FIG. 7] FIG. 7 is a plan view of the farm field.
[FIG. 8] FIG. 8 is a flowchart illustrating an example of a quality value calculation process.
[FIG. 9] FIG. 9 is a diagram illustrating an example of a plurality of types of first calibration curve data.
[FIG. 10] FIG. 10 is a diagram illustrating an example of a plurality of types of second calibration curve data.
[FIG. 11] FIG. 11 is a diagram illustrating an example of scaling data.
[FIG. 12] FIG. 12 is a diagram illustrating a mode when a processing unit determines a measured quality value of a fruit having an ID = 1.
[FIG. 13] FIG. 13 is a diagram illustrating an example of scaling data according to a modification.

### DETAILED DESCRIPTION

### [Problems to be Solved by Present Disclosure]

To measure a quality value using the foregoing measurement devices, the sensor unit needs to be brought close to the object to be measured.

Therefore, although the foregoing measurement devices are capable of measuring quality values of a certain number of fruits among a plurality of fruits produced on a large number of trees planted in a farm field, the foregoing measurement devices each have a difficulty in comprehensively measuring the fruits of the entire farm field.

In this respect, spectroscopic analysis similar to that of the foregoing measurement devices can be performed by using a type of spectral camera called a hyperspectral camera or a multispectral camera.

A spectral camera performs measurement on the basis of an image captured in a predetermined wavelength band. Therefore, a relatively wide range can be easily measured. Therefore, a plurality of fruits produced on a large number of trees planted in a farm field can be easily and comprehensively measured.

On the other hand, the spectral camera is likely to cause variations in measurement values due to external factors such as time, climate, and place as compared with the above-described measurement devices, and the spectral camera is thus thought to have measurement accuracy lower than measurement accuracy of the above-described measurement devices.

As described above, a measurement device having low measurement accuracy is generally more convenient than a measurement device having high measurement accuracy.

In order to give priority to convenience, the inventors of the present application have found a measure that allows the quality measurement accuracy to be easily improved even in a case of using a measurement device having a different configuration and having relatively low quality measurement accuracy, and have completed the embodiment disclosed below.

### [Effects of Present Disclosure]

According to the present disclosure, quality measurement accuracy with respect to fruit can be easily improved.

First, details of the embodiment will hereinafter be listed and described.

### [Brief Description of Embodiment]

(1) A measurement system according to the present disclosure includes: a first measurement device that measures quality of a plurality of fruits; a second measurement device that measures quality of a certain number of fruits among the plurality of fruits in an arrangement different from an arrangement used for the first measurement device; and a processing device that determines a measured quality value of a target fruit among the plurality of fruits. The processing device includes a processing unit that performs a process of determining the measured quality value on the basis of scaling data and on the basis of an output of the first measurement device obtained when quality of the target fruit is measured. The scaling data represents a correlation between an output of the first measurement device and a quality value based on an output of the second measurement device.

According to the above configuration, a quality value from the second measurement device corresponding to an output of the first measurement device obtained when quality of the target fruit is measured can be determined on the basis of the scaling data, and the quality value from the second measurement device determined can be determined as the measured quality value of the target fruit.

Therefore, when the second measurement device has measurement accuracy higher than measurement accuracy of the first measurement device, the output of the first measurement device can be corrected to a value corresponding to the quality value from the second measurement device having measurement accuracy higher than that of the first measurement device, thereby enabling the quality measurement accuracy to be easily improved.

(2) In the measurement system of item (1) described above, the correlation represented by the scaling data is preferably a correlation between a quality value based on the output of the first measurement device and the quality value based on the output of the second measurement device.

In this case, the quality value based on the output of the first measurement device can be corrected to a value corresponding to the quality value from the second measurement device.

(3) In the measurement system of item (1) or (2) described above, the first measurement device preferably includes a first measurement head that measures the plurality of fruits at a first distance from the plurality of fruits, and the second measurement device preferably includes a second measurement head that measures the certain number of fruits at a second distance from the certain number of fruits, where the second distance is shorter than the first distance.

In this case, the first measurement head is placed at the first distance longer than the second distance from the fruit, and can therefore perform measurement, at a time, in a wider range than that of the second measurement head, and is thus highly convenient. Thus, according to the above configuration, convenience can be improved by using the first measurement device while improving the quality measurement accuracy.

(4) The measurement system of item (3) described above may further include a moving mechanism that moves the second measurement head to a measurement position, the distance from which to the certain number of fruits is the second distance.

In this case, the second measurement head can be moved to the measurement position by the moving mechanism.

(5) In addition, in the measurement system of any one of items (1) to (4) described above, in a case where the first measurement device includes a spectral camera that receives reflected light from the plurality of fruits, the second measurement device may include a light source that emits light to the certain number of fruits and a spectrometer that disperses transmitted light from the certain number of fruits.

In this case, the first measurement device can measure a wider range than the second measurement device at a time, and is highly convenient. Thus, according to the above configuration, the quality measurement accuracy can be improved while improving convenience by using the first measurement device.

(6) Furthermore, in the measurement system of any one of items (1) to (5) described above, the processing unit preferably further performs processing of generating the scaling data.

In this case, scaling data dependent on the environment at the time of measurement by the first measurement device can be obtained, thereby enabling the quality measurement accuracy to be further improved.

(7) In addition, in the measurement system of item (1) or (6) described above, the scaling data is preferably determined on the basis of a plurality of outputs of the first measurement device and a plurality of reference quality values based on a plurality of outputs of the second measurement device, the plurality of outputs of the first measurement device and the plurality of reference quality values being obtained when the certain number of fruits are measured by both the first measurement device and the second measurement device.

In this case, the output of the first measurement device and the quality value from the second measurement device are associated with each other by the certain number of fruits. Therefore, the accuracy of the scaling data can be further improved.

(8) In addition, in the measurement system of item (7) described above, the scaling data may be determined on the basis of a maximum value and a minimum value of the plurality of outputs of the first measurement device and a maximum value and a minimum value of the plurality of reference quality values from the second measurement device.

In this case, the outputs of the first measurement device and the quality values from the second measurement device are associated with each other on the basis of at least these maximum values and these minimum values. Therefore, the scaling data can be easily determined without lowering the accuracy.

(9) The measurement system according to any one of items (1) to (8) described above may further include an agricultural machine including the first measurement device and the second measurement device installed thereon. In this case, quality of the fruits can be measured while the agricultural machine travels in the farm field in which fruit trees are cultivated, thereby enabling, for example, quality of the fruits of the fruit trees cultivated in the farm field to be efficiently measured.

(10) In addition, the present disclosure is directed to, as viewed from another viewpoint, a processing device that determines a measured quality value of a target fruit among a plurality of fruits. This processing device includes a processing unit that performs a process of determining the measured quality value on the basis of scaling data and on the basis of an output of a first measurement device obtained when quality of the target fruit is measured. The scaling data represents a correlation between an output of the first measurement device and a quality value based on an output of the second measurement device. The first measurement device measures quality of the plurality of fruits. The second measurement device measures quality of a certain number of fruits among the plurality of fruits in an arrangement different from an arrangement used for the first measurement device.

(11) In addition, the present disclosure is directed to, as viewed from another viewpoint, a method for determining a measured quality value of a target fruit among a plurality of fruits. This method includes a step of determining the measured quality value on the basis of scaling data and on the basis of an output of a first measurement device obtained when quality of the target fruit is measured. The scaling data represents a correlation between an output of the first measurement device and a quality value based on an output of the second measurement device. The first measurement device measures quality of the plurality of fruits. The second measurement device measures quality of a certain number of fruits among the plurality of fruits in an arrangement different from an arrangement used for the first measurement device.

(12) The present disclosure is directed to, as viewed from another viewpoint, a computer program for causing a computer to perform a process of determining a measured quality value of a target fruit among a plurality of fruits.

This computer program causes the computer to perform a step of determining the measured quality value on the basis of scaling data and on the basis of an output of a first measurement device obtained when quality of the target fruit is measured. The scaling data represents a correlation between an output of the first measurement device and a quality value based on an output of the second measurement device. The first measurement device measures quality of the plurality of fruits. The second measurement device measures quality of a certain number of fruits among the plurality of fruits in an arrangement different from an arrangement used for the first measurement device.

### [Details of Embodiment]

A preferred embodiment will hereinafter be described with reference to the drawings.

Note that at least portions of each embodiment described below may be arbitrarily combined.

### [Overall Configuration of Measurement System]

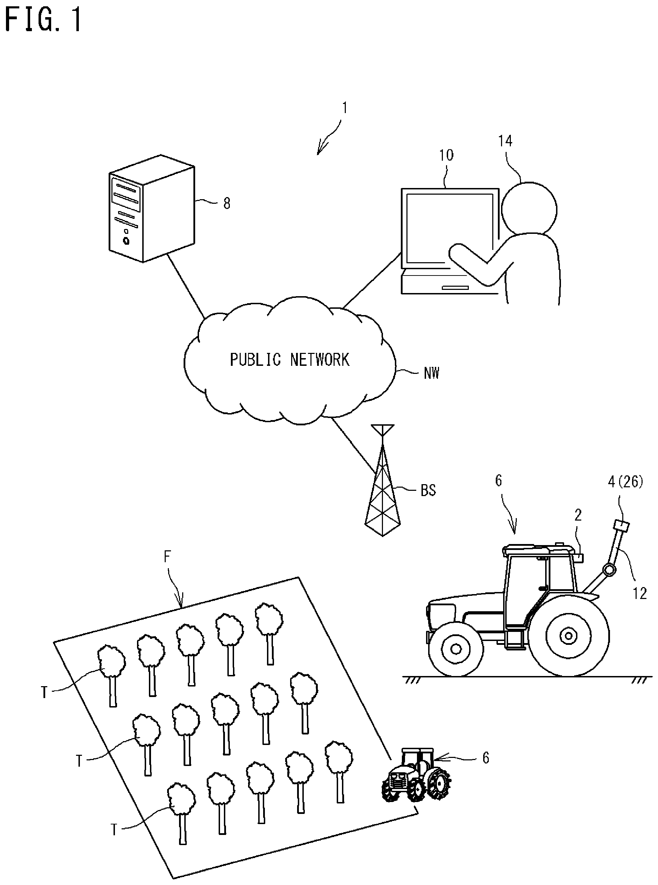

FIG. 1 is a diagram illustrating an example of an overall configuration of a measurement system according to the embodiment.

In FIG. 1, a measurement system 1 has a function of measuring quality values of fruits of fruit trees cultivated in a farm field F.

The farm field F of the present embodiment is, for example, a vineyard for cultivating grapes for use as a source of wine. Therefore, a plurality of trees T are cultivated in the farm field F. The plurality of trees T are fruit trees and are grapevine trees. The plurality of trees T are cultivated in a plurality of lines.

The measurement system 1 has a function of measuring quality values of grapevine fruits produced on the trees T. More specifically, the measurement system 1 determines the quality value of a fruit by analysis using near-infrared light. The quality value of a fruit is a value based on components representing the quality of the fruit. The types of quality values include sugar content, acidity, pH, polyphenol, and the like.

The measurement system 1 includes a first measurement device 2, a second measurement device 4, an agricultural machine 6, a management server 8, a management terminal 10, and a manipulator 12.

The first measurement device 2 and the second measurement device 4 are installed on the agricultural machine 6.

The manipulator 12 has a function of moving a second measurement head 26 (described later) included in the second measurement device 4.

The first measurement device 2 and the second measurement device 4 are devices for measuring quality of fruits. The first measurement device 2 and the second measurement device 4 each have a function of acquiring spectral information of a near-infrared region included in reflected light and transmitted light from a fruit. The spectral information of the near-infrared region includes information indicating a quality value of the fruit. Therefore, the first measurement device 2 and the second measurement device 4 output spectral information of the near-infrared region as a quality measurement result. The first measurement device 2 and the second measurement device 4 will be described in detail later.

The agricultural machine 6, the management server 8, and the management terminal 10 are mutually communicably connected to each other via a public network NW such as the Internet.

The agricultural machine 6 has, for example, a communication function using a mobile communication system. The agricultural machine 6 is connected to the public network NW via a wireless base station BS of the mobile communication system.

The management server 8 has a function of performing a process of determining the quality value of a fruit on the basis of an output of the first measurement device 2 and an output of the second measurement device 4.

The management terminal 10 is a terminal operated by an operator 14 of the measurement system 1. The management terminal 10 has a function of receiving an operation on the measurement system 1 performed by the operator 14 and a function of outputting a quality value and the like determined by the management server 8 to the operator 14.

The agricultural machine 6 is, for example, a tractor. The agricultural machine 6 can travel in the farm field F. The agricultural machine 6 can travel between lines of the plurality of trees T in the farm field F and come close to all the trees T in the farm field F. The agricultural machine 6 can travel in the farm field F by manual driving by operation of a worker or by automatic driving according to a control command from the management server 8 or according to a control command from the management terminal 10 based on an input of the operator 14.

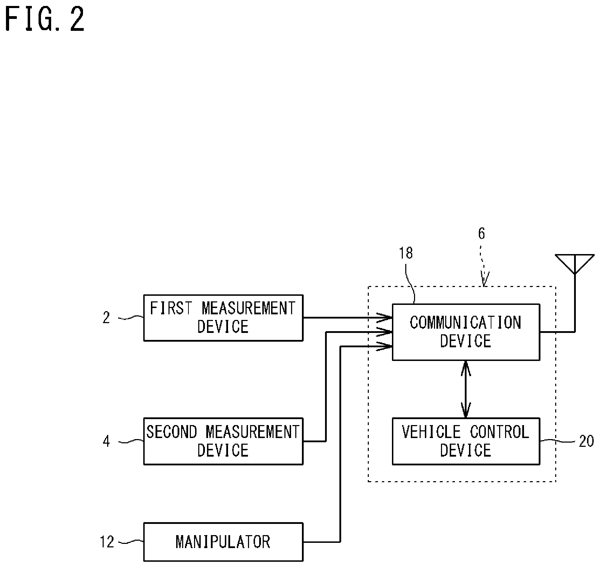

FIG. 2 is a block diagram illustrating a main part of the agricultural machine 6.

As illustrated in FIG. 2, the agricultural machine 6 includes a communication device 18 and a vehicle control device 20.

The communication device 18 has a function to function as a mobile terminal in the mobile communication system. Thus, the communication device 18 wirelessly communicates with the wireless base station BS.

The vehicle control device 20 has a function of controlling components of the agricultural machine 6. The vehicle control device 20 is connected to the public network NW via the communication device 18. Thus, the vehicle control device 20 is mutually communicably connected to the management server 8 and to the management terminal 10. The vehicle control device 20 exchanges necessary information with the management server 8 and with the management terminal 10 via the public network NW.

In a case where the agricultural machine 6 can be automatically driven, the vehicle control device 20 performs processing for performing automatic driving by controlling a camera and/or sensors for recognizing the surroundings of the agricultural machine 6 and controlling a drive system and a steering system of the agricultural machine 6 on the basis of a control command or the like from the management server 8 or the management terminal 10.

The first measurement device 2 and the second measurement device 4 are connected to the communication device 18 of the agricultural machine 6. The first measurement device 2 and the second measurement device 4 are connected to the public network NW via the communication device 18. Thus, the first measurement device 2 and the second measurement device 4 are also mutually communicably connected to the management server 8 and to the management terminal 10.

In addition, the manipulator 12 is also connected to the communication device 18 to be mutually communicably connected to the management server 8 and to the management terminal 10.

The first measurement device 2, the second measurement device 4, and the manipulator 12 receive a control command and/or the like from each of the management server 8 and the management terminal 10. As such, the first measurement device 2, the second measurement device 4, and the manipulator 12 are controlled by the management server 8 and by the management terminal 10.

In addition, the first measurement device 2, the second measurement device 4, and the manipulator 12 are capable of providing necessary information to the management server 8 and to the management terminal 10.

### [First Measurement Device 2 and Second Measurement Device 4]

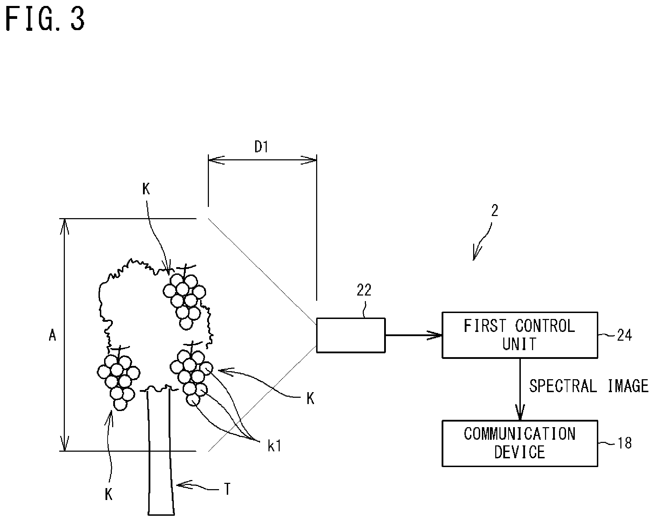

FIG. 3 is a block diagram illustrating an example of the first measurement device 2.

As described above, the first measurement device 2 is a device that measures a quality of a fruit, and outputs spectral information of the near-infrared region as a result of measurement of the quality.

The first measurement device 2 receives reflected light from a fruit and outputs spectral information obtained by dispersing the reflected light received. Note that the spectral information refers to information indicating a relationship between the wavelength and the light intensity in the near-infrared region.

As illustrated in FIG. 3, the first measurement device 2 includes a first measurement head 22 and a first control unit 24.

The first measurement head 22 includes, for example, a hyperspectral camera. A hyperspectral camera is a spectral camera that operates in a plurality of detection wavelength bands, in each of which intensity of light is detectable.

The first measurement head 22 (i.e., hyperspectral camera) operates in a plurality of detection wavelength bands in the near-infrared region. The first measurement head 22 captures an image of a predetermined imaging area to acquire a two-dimensional image. That is, the first measurement head 22 receives reflected light when an object existing in the imaging area is exposed to sunlight and acquires a two-dimensional image.

This two-dimensional image is formed of pixels, which have, as luminance, information indicating light intensity of the plurality of detection wavelength bands. Therefore, the image acquired by the first measurement head 22 has spectral information of the near-infrared region on a per-pixel basis. The image acquired by the first measurement head 22 is hereinafter referred to also as a spectral image.

As described above, the first measurement head 22 can acquire spectral information of the near-infrared region for each imaging area.

The first measurement head 22 is used for imaging grapevine fruits K, each of which is an object to be measured. The first measurement head 22 is a camera capable of capturing a two-dimensional image. Therefore, when each of the fruits (hereinafter referred to simply as the fruit) K is imaged by the first measurement head 22, a predetermined first distance D1 is kept between the first measurement head 22 and the grapevine fruit K. The first distance D1 is, for example, about 30 cm ± 5 cm.

Note that, as used in the present embodiment, the grapevine fruit K refers to a bunch including a plurality of fruit grains k1.

An imaging area A of the first measurement head 22 having the first distance D1 left therefrom has a size that allows imaging of a plurality of fruits K scattered on branches of a single one of the trees T.

Therefore, the spectral image captured by the first measurement head 22 includes a plurality of fruits K.

The first measurement head 22 outputs a spectral image including a plurality of fruits K imaged. That is, the first measurement head 22 receives the reflected light from a plurality of fruits K and outputs the spectral image.

The first measurement head 22 provides the captured spectral image to the first control unit 24.

The first control unit 24 is connected to the communication device 18 of the agricultural machine 6. The first control unit 24 has a function of controlling the first measurement head 22 according to a control command and/or the like provided from the management server 8 or from the management terminal 10. In addition, the first control unit 24 includes an input unit (not illustrated) that receives an operation input, and also has a function of controlling the first measurement head 22 on the basis of the operation input from the worker.

In addition, the first control unit 24 transmits the spectral image provided from the first measurement head 22 to the management server 8. That is, the spectral image acquired by the first measurement head 22 is provided to the management server 8 as an output (measurement result) of the first measurement device 2.

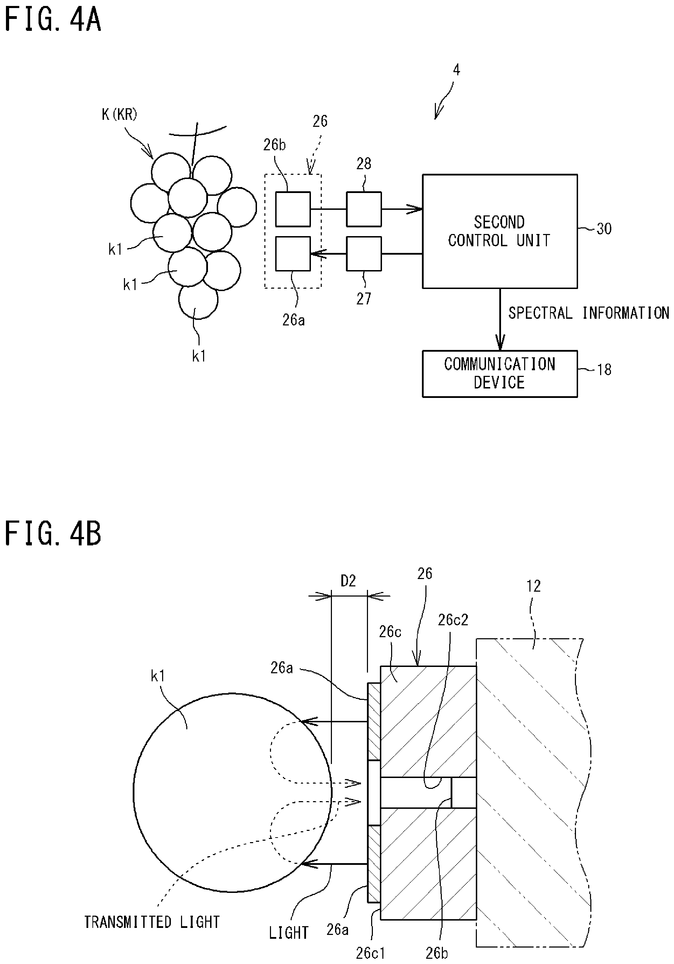

FIG. 4A is a block diagram illustrating an example of the second measurement device 4.

As described above, the second measurement device 4 is a device that measures a quality of the fruit K, and outputs spectral information of the near-infrared region as a quality measurement result.

The second measurement device 4 emits light to the fruit K, receives transmitted light transmitted through the fruit K, and outputs spectral information obtained by dispersing the transmitted light.

As illustrated in FIG. 4A, the second measurement device 4 includes a second measurement head 26, a light source 27, a spectrometer 28, and a second control unit 30.

The second measurement head 26 includes a light projection unit 26a and a light receiving unit 26b.

The light projection unit 26a and the light source 27 are connected to each other by an optical fiber.

The light source 27 is, for example, a halogen lamp. Light from the light source 27 is guided to the light projection unit 26a of the second measurement head 26 through the optical fiber. The light projection unit 26a projects the light from the light source 27 to the fruit K that is the object to be measured.

The light receiving unit 26b receives the transmitted light transmitted through the fruit K. The transmitted light received by the light receiving unit 26b is generated when the light from the light projection unit 26a is projected to the fruit K.

The light receiving unit 26b and the spectrometer 28 are connected to each other by an optical fiber. The transmitted light received by the light receiving unit 26b is guided to the spectrometer 28 through the optical fiber.

FIG. 4B is a cross-sectional view of the second measurement head 26.

As shown in FIG. 4B, the second measurement head 26 has a head body 26c. The head body 26c is an annular member made of resin or the like. The head body 26c is fixed to a distal end of the manipulator 12.

Therefore, the second measurement head 26 is movable by the manipulator 12.

The light projection unit 26a is provided on an annular distal end surface 26c1 of the head body 26c. The light projection unit 26a has an annular shape. When the light from the light source 27 is transmitted to the light projection unit 26a, the light is scattered inside thereof and uniformly emitted from the light projection unit 26a. The light from the light projection unit 26a is projected to one of the fruit grains (hereinafter referred to simply as the fruit grain) k1 of the fruit K, thereby resulting in transmitted light transmitted through the fruit grain k1 and reflected light reflected on the surface of the fruit grain k1.

The light receiving unit 26b is provided in a hole portion 26c2 of the head body 26c. The light receiving unit 26b receives the transmitted light transmitted through the hole portion 26c2.

Note that the light receiving unit 26b mainly receives the transmitted light but also receives the reflected light.

Measurement of the fruit K by the second measurement device 4 requires light to be emitted to the fruit grain k1 by the light projection unit 26a, thereby requiring the second measurement head 26 to be brought close to the fruit grain k1 of the fruit K.

In the measurement of the fruit K by the second measurement device 4, the second measurement head 26 is placed at a measurement position as illustrated in FIG. 4B. The measurement position illustrated in FIG. 4B refers to a position where the second measurement head 26 and the fruit grain k1 have a distance therebetween of a second distance D2. The second distance D2 is shorter than the first distance D1 (see FIG. 3). The second distance D2 is, for example, about 0 cm to 1 cm. A situation in which the second distance D2 is 0 cm is a situation in which the second measurement head 26 is in contact with the fruit grain k1.

The second measurement head 26 is placed at the measurement position by the manipulator 12. As described above, the manipulator 12 functions as a moving mechanism that moves the second measurement head 26 to the measurement position.

When the second measurement head 26 is placed at the measurement position close to the fruit grain k1, the light from the light projection unit 26a is projected to the fruit grain k1.

The light projected to the fruit grain k1 is transmitted through the fruit grain k1 as indicated by the arrows in FIG. 4B, thereby resulting in the transmitted light. The transmitted light passes through the hole portion 26c2 and is received by the light receiving unit 26b.

In FIG. 4A, the spectrometer 28 has a function of dispersing the transmitted light and a light receiving function of converting a dispersed spectrum into a signal. When receiving the transmitted light received by the light receiving unit 26b, the spectrometer 28 outputs spectral information obtained by dispersing the transmitted light.

The spectral information output from the spectrometer 28 is provided to the second control unit 30.

The second control unit 30 is connected to the communication device 18 of the agricultural machine 6. The second control unit 30 has a function of controlling the light source 27 and the spectrometer 28 according to a control command and/or the like provided from the management server 8 or from the management terminal 10. In addition, the second control unit 30 includes an input unit (not illustrated) that receives an operation input, and also has a function of controlling the light source 27 and the spectrometer 28 on the basis of the operation input from the worker.

In addition, the second control unit 30 transmits the spectral information provided from the spectrometer 28 to the management server 8. That is, the spectral information acquired by the spectrometer 28 is provided to the management server 8 as an output (measurement result) of the second measurement device 4.

As described above, the first measurement device 2 and the second measurement device 4 have configurations different from each other in the presence or absence of the spectroscopic camera, the presence or absence of the light source, and the like. In addition, while the first measurement device 2 collectively measures the quality of a plurality of fruits K, the second measurement device 4 measures the quality of one fruit grain k1.

In this respect, measurement accuracy represented as the quality value indicated by the spectral information output by the second measurement device 4 is higher than the measurement accuracy represented as the quality value indicated by the spectral image (spectral information) output by the first measurement device 2.

The measurement performed by the second measurement device 4 is performed in such a manner that the second measurement head 26 is brought close to the fruit grain k1 to acquire the spectral information from the transmitted light generated at the time of light projection, thereby causing the measurement to be unlikely to be affected by the surroundings.

In contrast, the measurement performed by the first measurement device 2 is performed in which the spectral information is acquired from the reflected light of the fruit(s) K, thereby causing the measurement to be likely to be affected by the surroundings.

As a result, the second measurement device 4 has measurement accuracy higher than the measurement accuracy of the first measurement device 2.

### [Management Server 8]

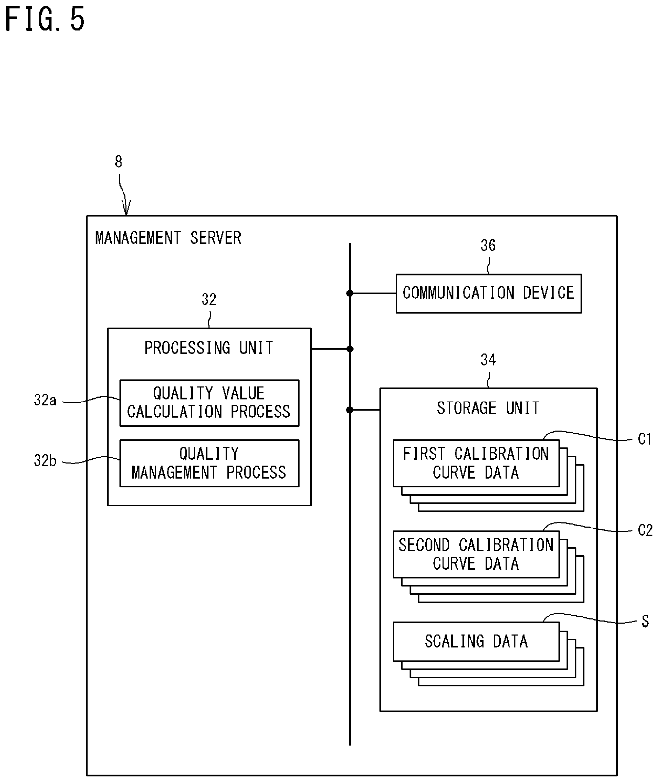

FIG. 5 is a block diagram illustrating an exemplary configuration of the management server 8.

As illustrated in FIG. 5, the management server 8 (processing device) is a type of information processing device including a processing unit 32, a storage unit 34, and a communication device 36.

The communication device 36 is a communication interface capable of communicating with an external device via the public network NW.

The processing unit 32 is, for example, one of various types of processors adapted to control of a computer, such as a central processing unit (CPU), a graphics processing unit (GPU), a digital signal processor (DSP), and a field programmable gate array (FPGA).

The storage unit 34 is, for example, a flash memory, a hard disk, a read-only memory (ROM), a random access memory (RAM), or the like.

The storage unit 34 stores a computer program to be executed by the processing unit 32 and necessary information. The processing unit 32 implements various processing functions of the processing unit 32 by executing a computer program stored in a computer-readable non-transitory recording medium such as the storage unit 34.

The storage unit 34 also stores a plurality of types of first calibration curve data C1, a plurality of types of second calibration curve data C2, and a plurality of types of scaling data S.

Each type of the plurality of types of first calibration curve data C1 is data for determining a quality value on the basis of an output of the first measurement device 2 (which quality value is a first quality value).

Each type of the plurality of types of second calibration curve data C2 is data for determining a quality value on the basis of an output of the second measurement device 4 (which quality value is a second quality value).

Each type of the plurality of types of scaling data S is data representing a correlation between the first quality value and the second quality value. The plurality of types of scaling data S are generated in a quality value calculation process 32a performed by the processing unit 32.

The processing unit 32 has a function of performing the quality value calculation process 32a and a quality value management process 32b.

The quality value calculation process 32a is a process of determining a measured quality value of a target fruit KT on the basis of the scaling data S and the first quality value of the target fruit KT. The target fruit KT is a fruit of the fruits K, the measured quality value of which is to be determined. In addition, the measured quality value is a quality value determined by the quality value calculation process 32a, and is a quality value for correcting the first quality value of the target fruit KT determined on the basis of the output of the first measurement device 2 and having higher accuracy than the accuracy of the first quality value.

The quality value management process 32b is a process of managing the measured quality value determined by the quality value calculation process 32a.

These processes will be described in detail later.

### [Quality Measurement Work of Fruits K in Farm Field F]

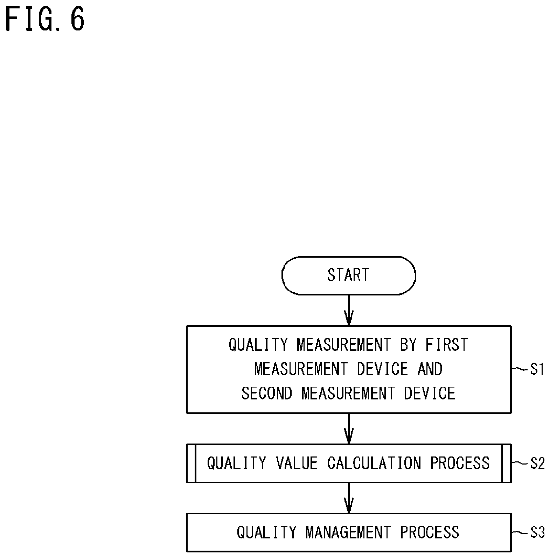

FIG. 6 is a flowchart illustrating an example of quality measurement work performed on the fruits K in the farm field F.

First, in the quality measurement work of the fruits K, quality measurement is performed by the first measurement device 2 and by the second measurement device 4, as illustrated in FIG. 6 (step S1 in FIG. 6).

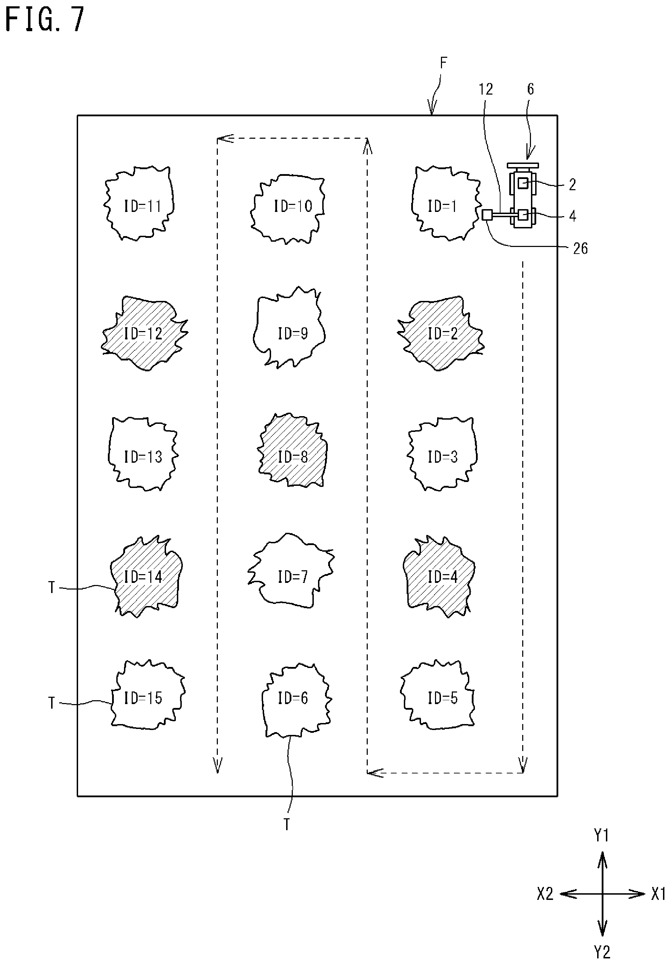

FIG. 7 is a plan view of the farm field F. In FIG. 7, two directions orthogonal to each other are defined as an X direction and a Y direction. As illustrated in FIG. 7, one direction of the X direction is defined as an X1 direction, and a direction opposite to the X1 direction is defined as an X2 direction. One direction of the Y direction is defined as a Y1 direction, and a direction opposite to the Y1 direction is defined as a Y2 direction.

The quality measurement by the measurement devices 2 and 4 is performed by causing the agricultural machine 6 to travel in the farm field F.

In the farm field F illustrated in FIG. 7, a plurality of trees T (15 trees in the example illustration) are cultivated, for example. Five trees T are arranged in the Y direction and three trees T are arranged in the X direction. Assuming that the Y direction is a line-wise direction, the trees T are arranged in three lines. One line includes five trees T.

Each of the 15 trees T cultivated in the farm field F is assigned with an ID as identification information. The 15 trees T are assigned with integers from 1 to 15 as the IDs.

The quality measurement work of the fruits K in the farm field F is performed on all the 15 trees T in the farm field F.

Among the 15 trees T, hatched trees T (trees T having the IDs = 2, 4, 8, 12, and 14) are trees T the quality of the fruits K of which is measured by both the first measurement device 2 and the second measurement device 4. The other trees T are trees T the quality of the fruit K of which is measured only by the first measurement device 2.

That is, the first measurement device 2 measures the quality of the fruits K of all the trees T, and the second measurement device 4 measures the quality of the fruits K on a certain number of trees T in the farm field F.

The quality measurement by the first measurement device 2 and by the second measurement device 4 in step S1 may be performed by an operation of a worker who operates the agricultural machine 6, or may be performed by remote control according to a command from the operator 14. When the quality measurement is performed by the worker, the agricultural machine 6 travels by manual driving by the worker, and the first measurement device 2 and the second measurement device 4 perform the quality measurement by manual operation by the worker. When the quality measurement is performed by remote control according to a command from the operator 14, the agricultural machine 6 travels by automatic driving, and the first measurement device 2 and the second measurement device 4 perform the quality measurement by control according to the command from the operator 14.

In the present embodiment, a case will be described where a worker who operates the agricultural machine 6 performs the quality measurement.

The worker rides on the agricultural machine 6 to travel along a side of the lines of the plurality of trees T in the agricultural field F along the broken lines in FIG. 7. Thus, the agricultural machine 6 comes close to the trees T sequentially starting from the tree T having the ID = 1. Upon reaching a side of each of the trees T, the worker stops the agricultural machine 6, and performs the quality measurement by the first measurement device 2 and by the second measurement device 4.

For example, as illustrated in FIG. 7, when the worker stops the agricultural machine 6 beside (on the X1 direction side of) the tree T having the ID = 1, the worker operates the first measurement device 2 and captures an image to include therein the plurality of fruits K of the tree T having the ID = 1 in the imaging area. As a result, the first measurement device 2 outputs a spectral image obtained by imaging the plurality of fruits K of the tree T having the ID = 1 and provides the spectral image to the management server 8. In this process, the first measurement device 2 adds the ID of the tree T to the spectral image output and transmits the resulting spectral image. The first measurement device 2 adds the ID of the tree T to the spectral image according to the operation input of the worker.

When the output (spectral image) of the first measurement device 2 is provided to the management server 8, the quality measurement of the fruits K on the tree T having the ID = 1 is completed.

When the quality measurement of the fruits K on the tree T having the ID = 1 is completed, the worker moves the agricultural machine 6 in the Y2 direction, and stops the agricultural machine 6 beside (on the X1 direction side of) the tree T having the ID = 2.

In this respect, the tree T having the ID = 2 is a tree T the quality of the fruits K of which is measured by both the first measurement device 2 and the second measurement device 4.

Thus, the worker operates the first measurement device 2 and captures an image to include therein the plurality of fruits K on the tree T having the ID = 2 in the imaging region. As a result, the first measurement device 2 outputs a spectral image obtained by imaging the plurality of fruits K of the tree T having the ID = 2 and provides the spectral image including the ID of the tree T added, to the management server 8.

The worker further operates the second measurement device 4 to perform quality measurement. The worker uses the manipulator 12 to bring the second measurement head 26 of the second measurement device 4 close to the tree T. The worker brings the second measurement head 26 close to one of the fruits K imaged by the first measurement device 2 among the plurality of fruits K of the tree T. The worker operates the second measurement device 4 to cause the second measurement device 4 to receive the transmitted light from that fruit K. As a result, the second measurement device 4 outputs spectral information of the fruit K of the tree T having the ID = 2 and provides the spectral information to the management server 8.

In the following description, those of the fruits K measured by the second measurement device 4 are each referred to also as reference fruit KR.

The second measurement device 4 also adds the ID of the tree T to the spectral image output, and transmits the resulting spectral image. The second measurement device 4 adds the ID of the tree T to the spectral information according to the operation input of the worker.

The second measurement device 4 may further add position information indicating the positions of the reference fruits KR to the spectral information according to an operation input by the worker.

When the output of the first measurement device 2 and the output of the second measurement device 4 are provided to the management server 8, the quality measurement of the tree T having the ID = 2 is completed.

As described above, the worker performs the quality measurement of the fruits K on the plurality of trees T according to the order of the IDs.

The output of the first measurement device 2 and the output of the second measurement device 4 (i.e., the spectral image and the spectral information) are stored in the storage unit 34 of the management server 8.

Therefore, the storage unit 34 stores the spectral images including IDs = 1 to 15 added thereto and the spectral information including IDs = 2, 4, 8, 12, and 14 added thereto.

As illustrated in FIG. 6, when the quality measurement by the first measurement device 2 and by the second measurement device 4 is completed, the quality value calculation process is next performed by the management server 8 (step S2 in FIG. 6).

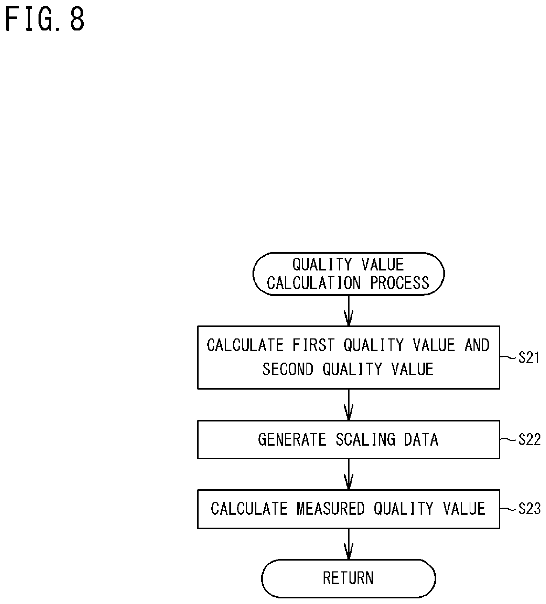

FIG. 8 is a flowchart illustrating an example of the quality value calculation process.

In the quality value calculation process, the measured quality value of each of the fruits K of the 15 trees T is determined.

First, as illustrated in FIG. 8, the processing unit 32 of the management server 8 determines the first quality value and the second quality value (step S21 in FIG. 8). The processing unit 32 determines the first quality value on the basis of the output (spectral image) of the first measurement device 2. The processing unit 32 also determines the second quality value on the basis of the output (spectral information) of the second measurement device 4.

The processing unit 32 determines the first quality value and the second quality value by a spectroscopic analysis method using near-infrared light.

Quantitative analysis by spectroscopic analysis using near-infrared light is an analysis method performed using a phenomenon that light is absorbed in a wavelength band in which a specific component remarkably absorbs the light, to a degree varying according to the content of the specific component.

The processing unit 32 determines a sugar content, an acidity, a pH, and a polyphenol content ratio each as the first quality value and the second quality value.

The wavelength band in the near-infrared region to be used in analyzing each of the sugar content, the acidity, the pH, and the polyphenol content ratio is set in advance.

A process for determining the first quality value will first be described.

The processing unit 32 obtains a spectroscopic image of a wavelength band corresponding to each of the quality values from the spectral image, which is the output of the first measurement device 2. In the present embodiment, the processing unit 32 obtains a spectroscopic image of the wavelength band corresponding to the sugar content, a spectroscopic image of the wavelength band corresponding to the acidity, a spectroscopic image of the wavelength band corresponding to the pH, and a spectroscopic image of the wavelength band corresponding to the polyphenol. Note that a spectroscopic image is an image in which luminance of pixels constituting the image represents light intensity in a predetermined wavelength band.

The following description will describe a process to be performed when the processing unit 32 determines the sugar content as the first quality value from the spectroscopic image of the wavelength band corresponding to the sugar content.

The processing unit 32 identifies image regions of portions of the plurality of fruits K in the spectroscopic image of the wavelength band corresponding to the sugar content. The luminance of pixels included in the plurality of image regions indicates light intensity in the wavelength band corresponding to the sugar content. In other words, the luminance of the pixels indicates the light absorption amount.

The processing unit 32 determines a representative value of luminance obtained from one spectroscopic image, on the basis of the luminance of pixels included in the image regions of the plurality of fruits K. For example, the processing unit 32 may use the average value of the luminance of the pixels included in the image regions of the plurality of fruits K as the representative value.

In addition, to identify image regions of the portions of the plurality of fruit K in a spectroscopic image, a threshold can be set with respect to the luminance. In this case, the processing unit 32 can identify a region having luminance equal to or larger than the threshold as each of the image regions of the fruits K.

In addition, when the reference fruits KR can be identified from the spectroscopic images of the trees T having the IDs = 2, 4, 8, 12, and 14 by the position information indicating the positions of the reference fruits KR, the processing unit 32 may determine the representative value of luminance on the basis of the pixels included in the image regions of only the portions of the reference fruits KR.

In this case, the luminance of the reference fruits KR can be determined.

Next, the processing unit 32 refers to the first calibration curve data C1, and determines the sugar content on the basis of the luminance (representative value).

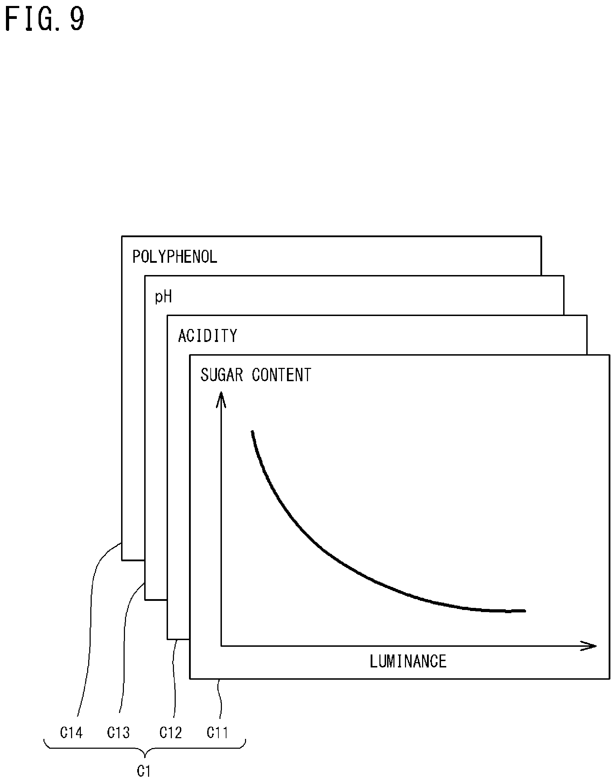

FIG. 9 is a diagram illustrating an example of the plurality of types of first calibration curve data C1. FIG. 9 schematically illustrates the first calibration curve data C1. As illustrated in FIG. 9, first calibration curve data C11 among a plurality of types of first calibration curve data C11 to C14 represents a correlation between the sugar content and the luminance of the pixels of the spectroscopic image of the wavelength band corresponding to the sugar content. Although not illustrated in FIG. 9, the first calibration curve data C12 represents a correlation between the acidity and the luminance of the pixels of the spectroscopic image of the wavelength band corresponding to the acidity. The first calibration curve data C13 represents a correlation between the pH and the luminance of the pixels of the spectroscopic image of the wavelength band corresponding to the pH. The first calibration curve data C14 represents a correlation between the polyphenol content ratio and the luminance of the pixels of the spectroscopic image of the wavelength band corresponding to the polyphenol.

The plurality of types of first calibration curve data C1 may each be any data that enables the first quality value to be determined from the luminance of the pixels of the spectroscopic image, and may each be a table obtained by an experiment, a simulation, or the like, or a linear or nonlinear mathematical formula.

When the sugar content is to be determined as the first quality value, the processing unit 32 refers to the first calibration curve data C11 for the sugar content, and determines the sugar content corresponding to the luminance as determined above. This sugar content is the first quality value.

The processing unit 32 also determines the acidity, the pH, and the polyphenol content ratio other than the sugar content each using a method similar to the method for the sugar content.

The processing unit 32 determines the first quality values (sugar content, acidity, pH, and polyphenol content ratio) for each of the trees T having the IDs = 1 to 15 on the basis of the output of the first measurement device 2 as described above.

A process for determining the second quality value will next be described.

The processing unit 32 determines absorbance in the wavelength band corresponding to each of the quality values from the spectral information, which is the output of the second measurement device 4. Note that the absorbance is a value indicating the degree of collection of light in a predetermined wavelength band with respect to that of the light from the light source 27.

The following description will describe a process to be performed when the processing unit 32 determines the sugar content as the first quality value.

The processing unit 32 refers to the second calibration curve data C2, and determines the sugar content on the basis of the absorbance (representative value).

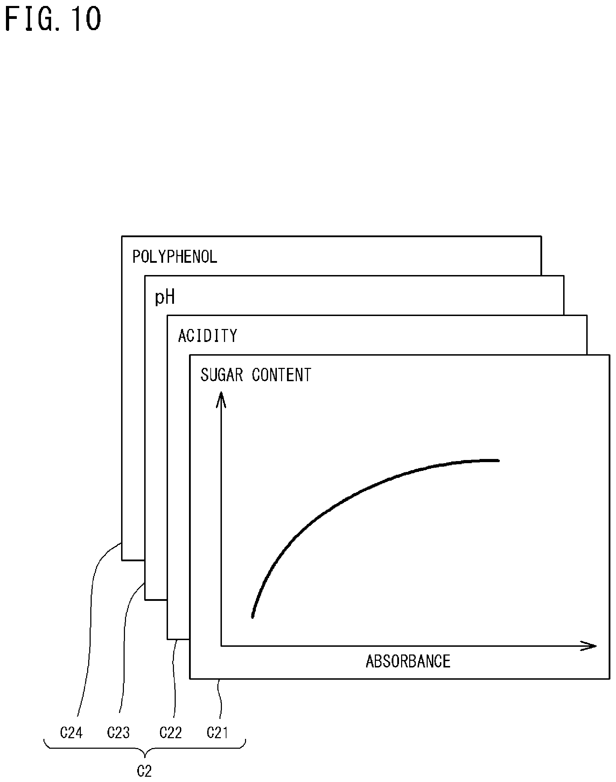

FIG. 10 is a diagram illustrating an example of the plurality of types of second calibration curve data C2. FIG. 10 schematically illustrates the second calibration curve data C2. As illustrated in FIG. 10, second calibration curve data C21 among a plurality of types of second calibration curve data C21 to C24 represents a correlation between the sugar content and the absorbance in the wavelength band corresponding to the sugar content. Although not illustrated in FIG. 10, the second calibration curve data C22 represents a correlation between the acidity and the absorbance in the wavelength band corresponding to the acidity. The second calibration curve data C23 represents a correlation between the pH and the absorbance in the wavelength band corresponding to the pH. The second calibration curve data C24 represents a correlation between the polyphenol content ratio and the absorbance in the wavelength band corresponding to the polyphenol.

The plurality of types of second calibration curve data C2 may each be any data that enables the second quality value to be determined from the absorbance, and may each be a table obtained by an experiment, a simulation, or the like, or a linear or nonlinear mathematical formula.

When the sugar content is to be determined as the second quality value, the processing unit 32 refers to the second calibration curve data C21 for the sugar content, and determines the sugar content corresponding to the absorbance as determined above. This sugar content is the second quality value.

The processing unit 32 also determines the acidity, the pH, and the polyphenol content ratio other than the sugar content each using a method similar to the method for the sugar content.

The processing unit 32 determines the second quality values (sugar content, acidity, pH, and polyphenol content ratio) for each of the trees T having the IDs = 2, 4, 8, 12, and 14 on the basis of the output of the second measurement device 4 as described above.

As described above, the processing unit 32 determines the first quality value of each of the trees T having the IDs = 1 to 15 and the second quality value of each of the trees T having the IDs = 2, 4, 8, 12, and 14 (step S21 in FIG. 8).

The processing unit 32 then generates scaling data S as illustrated in FIG. 8 (step S22 in FIG. 8).

The scaling data S is determined on the basis of the first quality values and the second quality values obtained when a certain number of fruits (the reference fruits KR) among the plurality of fruits K are measured by both the first measurement device 2 and the second measurement device 4. That is, the scaling data S is determined on the basis of the first quality value of each of the trees T having the IDs = 2, 4, 8, 12, and 14 and the second quality value of each of the trees T having the IDs = 2, 4, 8, 12, and 14. Hereinafter, the first quality values of the IDs = 2, 4, 8, 12, and 14 are each referred to also as reference first quality value, and the second quality values of the IDs = 2, 4, 8, 12, and 14 are each referred to also as reference second quality value.

Note that the first quality value for each of the trees T having the IDs = 2, 4, 8, 12, and 14 may be an average of the quality values of a plurality of fruits K including the reference fruits KR. In addition, there may be a case where the first quality value for each of the trees T having the IDs = 2, 4, 8, 12, and 14 only includes the quality value of the reference fruit KR.

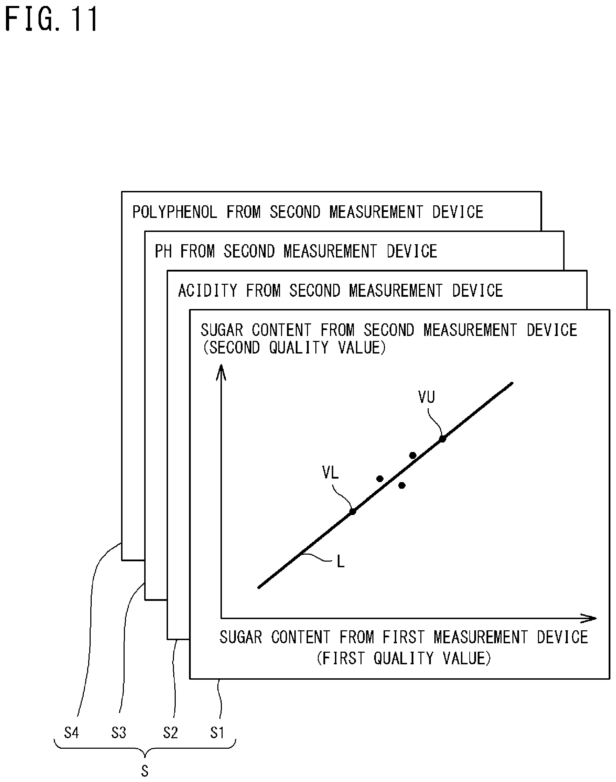

FIG. 11 is a diagram illustrating an example of the scaling data S. As shown in FIG. 11, scaling data S1 among a plurality of types of scaling data S1 to S4 represents a correlation between the sugar content obtained using the first measurement device 2 and the sugar content obtained using the second measurement device 4. Although not illustrated in FIG. 11, the scaling data S2 represents a correlation between the acidity determined by the first measurement device 2 and the acidity determined by the second measurement device 4. The scaling data S3 represents a correlation between the pH determined by the first measurement device 2 and the pH determined by the second measurement device 4. The scaling data S4 represents a correlation between the polyphenol content ratio determined by the first measurement device 2 and the polyphenol content ratio determined by the second measurement device 4.

The scaling data S1 includes a line plot L representing the correlation between the sugar content obtained using the first measurement device 2 and the sugar content obtained using the second measurement device 4. In the scaling data S1, the horizontal axis represents the sugar content (first quality value) obtained using the first measurement device 2, and the vertical axis represents the sugar content (second measured value) obtained using the second measurement device 4. The line plot L is a straight line passing through a point VU and a point VL.

The five points in FIG. 11 are points plotted for the reference fruits KR each having a reference first quality value and a reference second quality value.

The point VU among the five points is a point of one of the reference fruits KR that has a maximum value of a plurality of sugar contents obtained using the first measurement device 2 (the plurality of reference first quality values) and has a maximum value of the plurality of sugar contents obtained using the second measurement device 4 (the plurality of reference second quality values). The point VL is a point of one of the reference fruits KR that has a minimum value of the plurality of sugar contents obtained using the first measurement device 2 (the plurality of reference first quality values) and has a minimum value of the plurality of sugar contents obtained using the second measurement device 4 (the plurality of reference second quality values).

As described above, in the present embodiment, the scaling data S1 is determined on the basis of the plurality of reference first quality values and the plurality of reference second quality values obtained when the plurality of reference fruits KR are measured by both the first measurement device 2 and the second measurement device 4. In this case, the first quality values and the second quality values are associated with each other by the plurality of reference fruits KR. Thus, the accuracy of the scaling data S can be further improved.

In addition, the scaling data S1 is determined on the basis of a maximum value and a minimum value of the plurality of reference first quality values (outputs of the first measurement device 2) and a maximum value and a minimum value of the plurality of reference second quality values.

In this case, the reference first quality values and the reference second quality values are associated with each other on the basis of at least these maximum values and these minimum values. Therefore, the scaling data S1 can be easily determined without lowering the accuracy.

The other scaling data S2 to S4 are determined similarly to the case of the scaling data S1.

The scaling data S may be any data representing a correlation between the first quality values (outputs of the first measurement device 2) and the second quality values, and may be a table or a mathematical formula.

The processing unit 32 generates the scaling data S as described above (step S22 in FIG. 8).

The processing unit 32 then calculates a measured quality value as illustrated in FIG. 8 (step S23 in FIG. 8).

The processing unit 32 selects a target fruit KT from among the fruits K on the trees T having the IDs = 1 to 15 and determines a measured quality value of the target fruit KT on the basis of the scaling data S and the first quality value of the target fruit KT.

The processing unit 32 sequentially selects the target fruit KT from among the fruits K on the trees T having the IDs = 1 to 15 and repeatedly determines the measured quality value. In this manner, the processing unit 32 determines the measured quality value of each of the fruits K on the trees T having the IDs = 1 to 15.

The processing unit 32 refers to the scaling data S and determines the second quality value corresponding to the first quality value of the target fruit KT. The processing unit 32 determines this second quality value corresponding to the first quality value to be the measured quality value of the target fruit KT.

For example, a case will next be described of determining the sugar content as the measured quality value of one of the fruits K (hereinafter, the fruit K) on the tree T having the ID = 1.

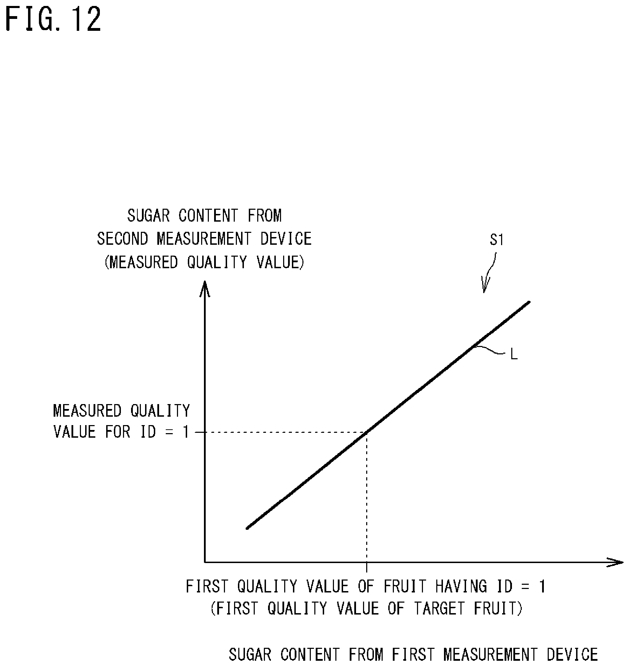

FIG. 12 is a diagram illustrating a mode when a processing unit 32 determines the measured quality value of the fruit K on the tree T having the ID = 1.

The processing unit 32 selects the fruit K on the tree T having the ID = 1 as the target fruit KT. Next, the processing unit 32 refers to the scaling data S1, and determines the sugar content (vertical axis in FIG. 12) obtained using the second measurement device 4 corresponding to the sugar content (horizontal axis in FIG. 12) that is the first quality value of the fruit K (target fruit KT) having an ID = 1 in the line plot L.

The processing unit 32 determines the sugar content obtained using the second measurement device 4 corresponding to the first quality value to be the measured quality value.

As described above, the vertical axis of the scaling data S1 represents the sugar content obtained using the second measurement device 4 and also the measured quality value determined from the first quality value.

The processing unit 32 also determines the acidity, the pH, and the polyphenol content ratio other than the sugar content among the measured quality values, each using a method similar to the method for the sugar content.

The processing unit 32 repeats a similar process for the fruits K on the trees T having the IDs = 1 to 15 to determine the measured quality value of each of the fruits K on the trees T having the IDs = 1 to 15.

Note that, regarding the fruits K on the trees T having the IDs = 2, 4, 8, 12, and 14 including the reference fruits KR, the second quality value measured by the second measurement device 4 may be used directly as the measured quality value.

The processing unit 32 calculates the measured quality value as described above (step S23 in FIG. 8).

Next, the processing unit 32 proceeds to step S3 in FIG. 6 and performs a quality management process of managing the measured quality value (step S3 in FIG. 6).

According to the above configuration, the second quality value corresponding to the first quality value (output of the first measurement device) of the target fruit KT can be determined on the basis of the scaling data S, and the second quality value determined can then be determined as the measured quality value of the target fruit KT.

As a result, the first quality value of the target fruit KT can be corrected to a value corresponding to the quality value from the second measurement device 4 having measurement accuracy higher than that of the first measurement device 2, and the quality measurement accuracy can thus be easily improved.

In addition, in the present embodiment, the first measurement head 22 of the first measurement device 2 is placed at the first distance D1 longer than the second distance D2 of the second measurement head 26 from the fruit K. This enables the first measurement head 22 to perform measurement, at a time, in a wider range than that of the second measurement head 26, and is thus highly convenient. Thus, according to the above configuration, convenience can be improved by measuring the quality of the fruits K in the entire farm field F using the first measurement device 2 while improving the quality measurement accuracy.

That is, in the present embodiment, the first measurement head 22 includes the hyperspectral camera (spectral camera). The first measurement device 2 can accordingly perform measurement, at a time, in a wider range than that of the second measurement device 4 including the light source 27 and the spectrometer 28, which disperses the transmitted light, and is therefore highly convenient. Thus, according to the present embodiment, use of the first measurement device 2 enables convenience to be improved while improving the quality measurement accuracy.

### [Others]

It should be understood that the embodiment disclosed herein is illustrative in all respects and is not restrictive.

For example, the above embodiment has been described regarding, by way of example, a case where the scaling data S is determined on the basis of the reference first quality values and the reference second quality values, and in step S23 in FIG. 8, the measured quality value of the fruit K is determined on the basis of the first quality value, which is the output of the first measurement device 2.

However, a configuration may be used in which the scaling data S is determined on the basis of the luminance from the first measurement device 2 when the reference fruit KR is measured and on the basis of the reference second quality value, and in step S23 in FIG. 8, the measured quality value of the fruit K is determined on the basis of the luminance that is the output of the first measurement device 2.

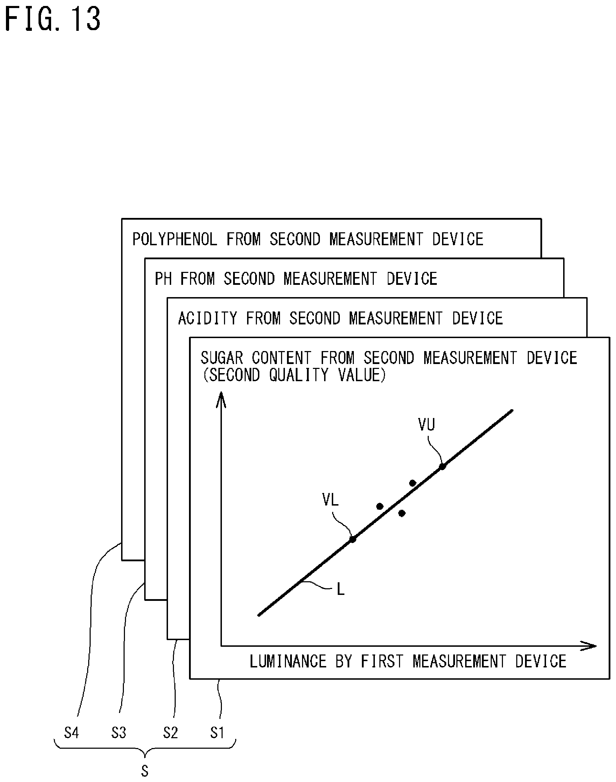

In this case, as illustrated in FIG. 13, the scaling data S is data representing the correlation between the luminance from the first measurement device 2 and the second quality value. In this case, the first calibration curve data C1 is no more necessary, thereby enabling computational load in the processing unit 32 to be reduced.

In addition, the above embodiment has been described regarding, by way of example, a case where the first measurement head 22 includes a hyperspectral camera, but the first measurement head 22 may include a multispectral camera instead of the hyperspectral camera. A multispectral camera is a spectral camera that can detect intensity of light in a fewer number of detection wavelength bands than that of a hyperspectral camera. Even a multispectral camera can be used similarly to a hyperspectral camera as long as light in a necessary wavelength band can be detected.

In addition, the above embodiment has been described regarding, by way of example, a case where the line plot L of the scaling data S is a straight line passing through the point VU and the point VL, and is determined on the basis of the maximum value and the minimum value of the plurality of reference first quality values and the maximum value and the minimum value of the plurality of reference second quality values. However, the present invention is not limited to this. For example, the scaling data S may be determined in such a manner that an approximate expression is obtained using a plurality of points determined by the reference first quality values and the reference second quality values, and this approximate expression is used as the scaling data S.

The scope of the present invention is defined not by the above meaning but by the claims, and is intended to include meanings equivalent to the claims and all modifications within the scope.

### REFERENCE SIGNS LIST

1 measurement system
2 first measurement device
4 second measurement device
6 agricultural machine
8 management server
10 management terminal
12 manipulator
14 operator
18 communication device
20 vehicle control device
22 first measurement head
24 first control unit
26 second measurement head
26a light projection unit
26b light receiving unit
26c head body
26c1 annular distal end surface
26c2 hole portion
27 light source
28 spectroscope
30 second control unit
32 processing unit
32a quality value calculation process
32b quality value management process
34 storage unit
36 communication device
A imaging area
BS wireless base station
C1, C11, C12, C13, C14 first calibration curve data
C2, C21, C22, C23, C24 second calibration curve data
D1 first distance
D2 second distance
F farm field
K fruit
KT target fruit
KR reference fruit
L line plot
NW public network
S, S1, S2, S3, S4 scaling data
T tree
k1 granular fruit

## Claims

1. A measurement system comprising:
a first measurement device that measures quality of a plurality of fruits;
a second measurement device that measures quality of a certain number of fruits among the plurality of fruits in an arrangement different from an arrangement used for the first measurement device; and
a processing device that determines a measured quality value of a target fruit among the plurality of fruits, wherein
the processing device comprises
a processing unit that performs a process of determining the measured quality value on a basis of scaling data and on a basis of an output of the first measurement device obtained when quality of the target fruit is measured, the scaling data representing a correlation between an output of the first measurement device and a quality value based on an output of the second measurement device.

2. The measurement system according to claim 1, wherein
the correlation represented by the scaling data is a correlation between a quality value based on the output of the first measurement device and the quality value based on the output of the second measurement device.

3. The measurement system according to claim 1 or 2, wherein
the first measurement device comprises a first measurement head that measures the plurality of fruits at a first distance from the plurality of fruits, and
the second measurement device comprises a second measurement head that measures the certain number of fruits at a second distance from the certain number of fruits, the second distance being shorter than the first distance.

4. The measurement system according to claim 3, further comprising:
a moving mechanism that moves the second measurement head to a measurement position, a distance from which to the certain number of fruits is the second distance.

5. The measurement system according to any one of claims 1 to 4, wherein
the first measurement device comprises a spectral camera that receives reflected light from the plurality of fruits, and
the second measurement device comprises
a light source that emits light to the certain number of fruits and
a spectrometer that disperses transmitted light from the certain number of fruits.

6. The measurement system according to any one of claims 1 to 5, wherein
the processing unit further performs processing of generating the scaling data.

7. The measurement system according to any one of claims 1 to 6, wherein
the scaling data is determined on a basis of a plurality of outputs of the first measurement device and a plurality of reference quality values based on a plurality of outputs of the second measurement device, the plurality of outputs of the first measurement device and the plurality of reference quality values being obtained when the certain number of fruits are measured by both the first measurement device and the second measurement device.

8. The measurement system according to claim 7, wherein
the scaling data is determined on a basis of a maximum value and a minimum value of the plurality of outputs of the first measurement device and a maximum value and a minimum value of the plurality of reference quality values from the second measurement device.

9. The measurement system according to any one of claims 1 to 8, further comprising:
an agricultural machine comprising the first measurement device and the second measurement device being installed on the agricultural machine.

10. A processing device for determining a measured quality value of a target fruit among a plurality of fruits, the processing device comprising:
a processing unit that performs a process of determining the measured quality value on a basis of scaling data and on a basis of an output of a first measurement device obtained when quality of the target fruit is measured, wherein the scaling data represents a correlation between an output of the first measurement device and a quality value based on an output of a second measurement device, the first measurement device measures quality of the plurality of fruits, and the second measurement device measures quality of a certain number of fruits among the plurality of fruits in an arrangement different from an arrangement used for the first measurement device.

11. A method for determining a measured quality value of a target fruit among a plurality of fruits, the method comprising:
a step of determining the measured quality value on a basis of scaling data and on a basis of an output of a first measurement device obtained when quality of the target fruit is measured, wherein the scaling data represents a correlation between an output of the first measurement device and a quality value based on an output of a second measurement device, the first measurement device measures quality of the plurality of fruits, and the second measurement device measures quality of a certain number of fruits among the plurality of fruits in an arrangement different from an arrangement used for the first measurement device.

12. A computer program for causing a computer to perform processing of determining a measured quality value of a target fruit among a plurality of fruits, the computer program causing the computer to perform:
a step of determining the measured quality value on a basis of scaling data and on a basis of an output of a first measurement device obtained when quality of the target fruit is measured, wherein the scaling data represents a correlation between an output of the first measurement device and a quality value based on an output of a second measurement device, the first measurement device measures quality of the plurality of fruits, and the second measurement device measures quality of a certain number of fruits among the plurality of fruits in an arrangement different from an arrangement used for the first measurement device.
